Europäisches Patentamt

European Patent Office

Office européen des brevets

(11) Veröffentlichungsnummer: **0 277 344 B1**

(12) **EUROPÄISCHE PATENTSCHRIFT**

(45) Veröffentlichungstag der Patentschrift: **17.07.91**

(21) Anmeldenummer: **87118993.2**

(22) Anmeldetag: **21.12.87**

(51) Int. Cl.5: **E04F 17/08**, H02G 3/04, H02G 3/26

(54) **Anbaukanäle für Leitungen.**

(30) Priorität: **02.02.87 DE 8701537 U**

(43) Veröffentlichungstag der Anmeldung:
**10.08.88 Patentblatt 88/32**

(45) Bekanntmachung des Hinweises auf die
Patenterteilung:
**17.07.91 Patentblatt 91/29**

(84) Benannte Vertragsstaaten:
**AT CH DE LI SE**

(56) Entgegenhaltungen:
EP-A- 0 161 226          WO-A-86/06887
DE-U- 7 216 572          FR-A- 1 575 452
GB-A- 595 655            US-A- 3 911 637

(73) Patentinhaber: **REHAU AG + Co
Rheniumhaus
W-8673 Rehau(DE)**

(72) Erfinder: **Der Erfinder hat auf seine Nennung
verzichtet**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Anbaukanäle für Leitungen mit U-förmigen, miteinander verbundenen Einzelkanälen, die durch Deckelemente nach außen verschließbar sind.

Aus dem DE-GM 72 16 572 ist ein Hohlkörper zum Verlegen von Kabeln in Räumen bekannt. Dieser Hohlkörper besitzt einen Grund- oder Rumpfteil, welcher durch eine Anzahl von Zusatzelementen erweitert werden kann. Bei diesen Zusatzelementen handelt es sich um einen Wandbügel, welcher mit Schrauben an einer Wand befestigt werden kann und der die Distanz zwischen der Wand und dem Hohlkörper festlegt.

Unter dem Hohlkörper des bekannten Standes der Technik kann eine Hänge- oder Verkleidungsleiste angeordnet werden, welche Öffnungen zum Einclipsen von separaten Kabelkanälen aufweist. Solche separaten Kabelkanäle können in entspechende Öffnungen eines Wandbügels auf dessen Sichtseite ebenfalls eingeclipst sein. Der Hohlkörper selbst kann durch eine Verschlußleiste verschlossen werden.

Mit dem Hohlkörper des bekannten Standes der Technik und den beschriebenen Zusatzelementen wird ein zentraler Kabelkanal geschaffen, welcher weitere Kabelverlegungsmöglichkeiten durch die separaten Kabelkanäle an der Hänge- oder Verkleidungsleiste bzw. an der Außenseite des Wandbügels aufweist. Die separaten Kabelkanäle können dabei eine vorteilhafte Abstellfläche bzw eine Verkleidung für Heizkörper und dgl. darstellen. Der Nachteil einer solchen Anordnung ist darin zu sehen, daß eine starre Abstandhalterung des Hohlkörpers über den Wandbügel zur Befestigungswand und der separaten Kabelkanäle auf der starr angeordneten Hänge- und Verkleidungsleiste erfolgt. Dadurch kann dieses Hohlkörper-Kanalelement den örtlichen Gegebenheiten schwer und in manchen Fällen gar nicht angepaßt werden.

Aus der EP-A 0 161 226 ist ein starrer Kabelkanal-Aufbau bekannt, der über einen mit Langlöchern versehenen Halter stufenlos an der Befestigungswand festlegbar ist. Aufgrund der besonderen Ausführungsform des Halters ist die Verschieblichkeit des Kabelkanals im Bereich der Langlöcher lediglich in der Ebene gegeben, die in einem Winkel von 90° zur Längsachse des Kabelkanals liegt.

Hier setzt die Erfindung ein, die es sich zur Aufgabe gestellt hat, ein Kabelkanalsystem zu schaffen, welches durch Verstellbarkeit der Einzelelemente an die Gegebenheiten der Wandbereiche der Befestigung angepaßt werden kann. Erfindungsgemäß wird dazu vorgeschlagen, daß die Kanäle auf jeweils einem Abstandhalter gehaltert sind, daß die benachbarten Abstandhalter sich überlappen und stufenlos aufeinander verschieblich und festlegbar sind, daß dadurch ein zwischen den Kanälen befindlicher zusätzlicher Aufnahmeraum mit in den Grenzen der stufenlosen Verstellbarkeit der Abstandhalter variablem Volumen geschaffen ist, daß der Aufnahmeraum seinerseits durch ein Deckelement zur Vorderseite der Kanäle abdeckbar ist, und daß der bodenseitige Abstandhalter am untersten Kanal in einer Aufnahmenut den oberen Rand einer Abdeckung halternd aufnimmt.

Die Mehrzahl der erfindungsgemäßen, aufeinander verschieblichen Abstandhalter ermöglicht es, den Abstand benachbarter Kanäle zueinander in beliebiger Weise festzulegen. Einer der besonderen Vorteile der Erfindung wird darin gesehen, daß mit diesen aufeinander verschieblichen Abstandhaltern eine Höhenverstellung der Kabelkanäle bewirkt werden kann, wobei ein zwischen den Kanälen befindlicher zusätzlicher Aufnahmeraum mit variablem Volumen geschaffen wird. Dieser zusätzliche Aufnahmeraum kann erfindungsgemäß durch ein Deckelement verschlossen werden, wodurch zwischen den einzelnen Kabelkanälen ein weiterer, geschlossener Kanal zur Aufnahme von Leitungen und dgl. geschaffen wird.

Es hat sich als vorteilhaft erwiesen, daß der bodenseitige Abstandhalter eine den zugeordneten Kanal untergreifende, stufenförmige Abwinklung aufweist, welche am freien Ende in eine 90° Abkantung ausläuft. Mit dieser stufenförmigen Abwinkelung wird ein zusätzliches Tragelement für das Kanalsystem geschaffen, so daß die Aufhängung an der Wandkonsole unterstützt wird. Die 90°-Abkantung bildet zwischen einer inneren flächigen Auflage und einer außenliegenden Haltezunge eine Aufnahmenut für Teilbereiche der höhenverstellbaren Abdeckung.

Das Kanalsystem ist rückseitig an einem der Kanäle an einer Wandkonsole angeordnet, welche ebenfalls für die stufenlose Einstellung des Wandabstandes eine Langlochverschiebung mit Festlegemitteln aufweist. Vorteilhaft sind in die höhenverstellbare Abdeckung und/oder die Wandkonsole in außenliegenden Bereichen Schlitzöffnungen zum Einstecken von Abdecklamellen eingebracht. Auf diese Weise wird keine völlig geschlossene Abdeckung zur Wand geschaffen, sondern es bleiben Belüftungsöffnungen, welche eine Belüftung des Zwischenraumes zwischen dem Kanalsystem und der Befestigungswand nach vorn und nach oben ermöglichen.

Die einzelnen Kanäle des Kanalsystems sind durch einclipsbare Deckel verschließbar.

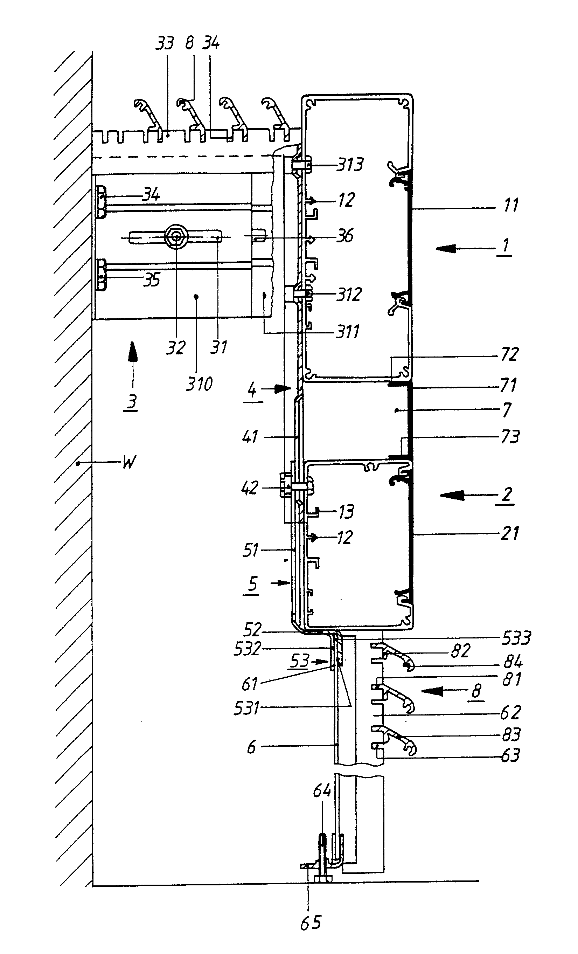

In der Zeichnung ist ein Ausführungsbeispiel des neuerungsgemässen Kanalsystems schematisch dargestellt. Die Zeichnung zeigt den Kanal 1, der beispielsweise für die Aufnahme von Kabeln für die Elektroverdrahtung ausgestaltet sein kann. Der Kanal 1 ist in bekannter Weise mit einem Deckel 11 z.B. rastend verschlossen. Am inneren Boden des Kanals 1 können Aufnahmeelemente 12, 13 zum Einrasten bzw. Aufstecken bekannter Kabelkanalunterteilungen angeformt sein.

Der Kanal 1 ist über den Abstandhalter 4 und den sich mit diesem überlappenden Abstandhalter 5 mit dem Kanal 2 verbunden. Die Abstandhalter 4, 5 besitzen jeweils ein Langloch 41, 51, in deren Überlappungsbereich das schraubenbolzenartige Befestigungsmittel 42 eingreift. Über die Langlöcher 41, 51 und das darin geführte schraubenbolzenartige Befestigungsmittel 42 sind die Kanäle 1, 2 stufenlos aufeinander verschiebbar. Auf der Basis dieser stufenlosen Verschiebbarkeit läßt sich die Höhe des Aufnahmeraums 7 beliebig einstellen. Der Aufnahmeraum 7 ist in der Darstellung mit dem Deckelement 71 abgedeckt. Ein solches einstückiges Deckelement 71 hat zur Voraussetzung, daß eine definierte Höhe des Aufnahmeraums 7 jeweils eingehalten wird. Läßt sich diese Forderung nicht erreichen, können anstelle des einstückigen Deckelementes 71 in der Zeichnung nicht dargestellte Winkelelemente eingesetzt werden, die sich an den freien Enden gegenseitig überlappen. Diese Winkelelemente sind - genauso wie das einstückige Deckelement 71 - mit den Winkelschenkeln 72, 73 an den zugeordneten Außenwandbereichen der Kanäle 1, 2 festgelegt, z.B. durch Verkleben oder durch mechanische Verbindungsmittel. Die sich überlappenden freien Enden der nicht dargestellten Winkelelemente folgen der Verschiebebewegung der Kanäle 1, 2 zueinander durch die überlappenden Abstandhalter 4, 5. Auf diese Weise läßt sich stufenlos die Höhe des Aufnahmeraums 7 einstellen, wobei gleichzeitig die sich überlappenden Schenkel der Winkelelemente einen Abschluß des Aufnahmeraums 7 nach vorn bewirken.

Der bodenseitige Abstandhalter 5 weist eine den Kanal 2 untergreifende, stufenförmige Abwinkelung 52 auf, die als Aufständerhalterung für das System der Kanäle 1, 2 dient. Dieses System der Kanäle 1, 2 wird durch die feste Verschraubung des schraubenbolzenartigen Befestigungsmittels 42 erzielt, wobei die feste Verschraubung bewirkt, daß die Abstandhalter 4, 5 aufeinander festgelegt werden und somit das Kanalsystem der Kanäle 1, 2 mit dem zwischenliegenden Aufnahmeraum 7 bilden.

Die stufenförmige Abwinkelung 52 des Abstandhalters 5 verläuft am freien Ende in einer 90°-Abkantung 53. Diese 90°-Abkantung 53 besitzt eine zwischen einer flächigen Auflage 531 und einer Haltezunge 532 verlaufende Aufnahmenut 533 für Teilbereiche 61 der höhenverstellbaren Abdeckung 6. In dieser Aufnahmenut ist die höhenverstellbare Abdeckung verschieblich gelagert. Die Verschiebung erfolgt hier durch die Verstellschraube 64, welche ihrerseits in einer 90°-Abkantung 65 der höhenverstellbaren Abdeckung 6 schraubverdrehbar gelagert ist.

Die höhenverstellbare Abdeckung 6 besitzt auf ihrer Sichtseite 62 Schlitzöffnungen 63 zum Einstecken von Abdecklamellen 8. Die Abdecklamellen 8 besitzen einen Einsteckbereich 81, einen Abstützbereich 82 sowie einen schräg nach unten gerichteten Abdeckbereich 83. Dieser Abdeckbereich 83 kann beliebig gestaltet sein. In der gezeigten Ausführungsform ist eine von der Sichtseite abgewandte Aufnahmeöffnung 84 in die Abdecklamelle 8 eingeformt, wobei in diese Aufnahmeöffnung 84 ein zusätzlicher Draht oder ein sonstiges Leitungselement eingelegt bzw. eingeknüpft werden kann.

Der als Wandkonsole ausgebildete Abstandhalter 3 ist an der Befestigungswand W durch Schraubverbindungen 34, 35 festgelegt.

Der Abstandhalter 3 ist zweiteilig ausgebildet und besitzt den Wandbefestigungsbereich 310 sowie den Befestigungsbereich 311, welcher über die Befestigungselemente 312, 313 am Boden des Kanals 1 festgelegt ist. Die Bereiche 310, 311 des Abstandhalters 3 sind durch die überlappenden Langlöcher 31, 36 axial verschieblich aufeinander angeordnet. Die Festlegemittel 32, bei denen es sich um eine Schraubverbindung handeln kann, gestatten die Festlegung der aufeinander verschieblichen Teilbereiche 310, 311 des Abstandhalters 3 und damit eine stufenlose Einstellung des Wandabstandes des Systems der Kanäle 1, 2, 7.

Im außenliegenden Bereich 33 des Abstandhalters 3 sind Schlitzöffnungen 34 eingebracht, in welche Abdecklamellen 8 eingebracht sind, welche den Abdecklamellen 8 im Bereich der höhenverstellbaren Abdeckung 6 entsprechen können. Im Bedarfsfall können die Abdecklamellen 8 am Abstandhalter 3 auch eine andere Außenform aufweisen.

## Patentansprüche

1. Anbaukanäle für Leitungen mit U-förmigen, miteinander verbundenen Einzelkanälen (1, 2), die durch Deckelemente (11, 21) nach außen verschließbar sind, dadurch gekennzeichnet, daß die Kanäle (1,2) auf jeweils einem Abstandhalter (4, 5) gehaltert sind, daß die benachbarten Abstandhalter sich überlappen und stufenlos aufeinander verschieblich und festlegbar sind, daß dadurch ein zwischen den Kanälen (1, 2) befindlicher zusätzlicher Aufnahmeraum (7) mit in den Grenzen der stufenlosen Verstellbarkeit der Abstandhalter (4, 5) variablem Volumen geschaffen ist, daß der Aufnahmeraum (7) seinerseits durch ein Deckelement (71) zur Vorderseite der Kanäle (1, 2) abdeckbar ist, und daß der bodenseitige Abstandhalter (5) am untersten Kanal (2) in einer Aufnahmenut (533) den oberen Rand (61) einer Abdeckung (6) halternd aufnimmt.

2. Anbaukanäle nach Anspruch 1, dadurch gekennzeichnet, daß der bodenseitige Abstandhalter (5) eine den Kanal (2) untergreifende, stufenförmige Abwinkelung (52) aufweist, welche am freien Ende in eine 90°-Abkantung (53) ausläuft.

3. Anbaukanäle nach Anspruch 2, dadurch gekennzeichnet, daß die 90°-Abkantung (53) zwischen einer flächigen Auflage (531) und einer Haltezunge (532) eine Aufnahmenut (533) für Teilbereiche (61) der höhenverstellbaren Abdeckung (6) bildet.

**Claims**

1. Extension cable trunkings with U-shaped, individual interconnected ducts (1, 2) which can be covered by lid elements (11, 21), characterised by the fact that ducts (1, 2) are each supported on a spacer (4, 5), and characterised by the fact that adjacent spacers overlap and can be infinitely spaced apart and fixed in position to create an additional compartment (7) between ducts (1, 2) with a volume which can be varied within the bounds of the infinitely adjustable spacers (4, 5), and characterised by the fact that the compartment (7) for its part can also be covered by a lid element (71) at the front side of ducts (1, 2), and characterised by the fact that the spacer (5) located at the rear side of the bottommost duct (2) accommodates the upper edge (61) of a cover piece (6) in a retaining groove (533).

2. Extension cable trunkings as described in claim 1, characterised by the fact that the rear-side spacer (5) features a stepped bracket (52) projecting beneath the duct (2) and which ends in a 90° bend (53) at its free end.

3. Extension cable trunkings as described in claim 2, characterised by the fact that the 90° bend (53) between a contact area (531) and a retainer lug (532) forms a receiving groove (533) for parts (61) of the height-adjustable cover piece (6).

**Revendications**

1. Caniveaux additionnels pour canalisations avec des caniveaux indépendants (1, 2) en forme de U, reliés entre eux qui peuvent être fermés vers l'extérieur par des éléments de recouvrement (11, 21), caractérisés par le fait que les caniveaux (1,2) sont respectivement maintenus sur des écarteurs (4,5), caractérisés par le fait que les écarteurs contigus se chevauchent et qu'ils peuvent être déplacés en continu les uns sur les autres et fixés, caractérisés par le fait qu'entre les caniveaux (1,2) il y a un espace de réception complémentaire (7) d'un volume variable dans les limites du déplacement en continu des écarteurs (4, 5), caractérisés par le fait que l'espace de réception (7) peut être, de son côté, recouvert par un élément de recouvrement (71) vers l'avant des caniveaux (1,2) et par le fait que l'écarteur(5) du côté du fond sur le caniveau inférieur extrême (2) reçoit le rebord supérieur (61) d'un couvercle (6) dans une rainure de réception (533).

2. Caniveaux additionnels selon la revendication 1, caractérisés par le fait que l'écarteur (5) du côté du fond présente une pliure (52) par degrés passant sous le caniveau (2) et qui se termine en un pliage à 90° (53).

3. Caniveaux additionnels selon la revendication 2, caractérisés par le fait que le pliage à 90° (53) forme une rainure de réception (533) entre l'appui plan (531) et une langue de retenue (532) pour le sous-domaine (61) du couvercle (6) réglable en hauteur.